# EUROPEAN PATENT SPECIFICATION

(11) **EP 2 150 458 B1**
(45) Date of publication and mention of the grant of the patent: **21.03.2012**
(21) Application number: 08750744.8
(22) Date of filing: 13.05.2008
(51) Int. Cl.: B62D 55/30

(54) **A CONTINUOUS TRACK TENSIONING SYSTEM FOR A TRACKED VEHICLE**
ENDLOSKETTENSPANNSYSTEM FÜR EIN KETTENFAHRZEUG
SYSTÈME DE MISE SOUS TENSION DE CHENILLES SANS FIN POUR UN VÉHICULE À CHENILLES

(30) Priority: 19.05.2007 GB 0709685; 11.01.2008 GB 0800434
(43) Date of publication of application: 10.02.2010
(73) Proprietor: Cox, Andrew Spencer, Slimbridge Gloucester Gloucestershire GL2 7DG (GB)
(72) Inventor: Cox, Andrew Spencer, Slimbridge Gloucester Gloucestershire GL2 7DG (GB)
(74) Representative: Hands, Lewis Roger
(86) International application number: PCT/GB2008/050345
(87) International publication number: WO 2008/142438

(56) References cited:
- GB-A- 844 768
- GB-A- 2 393 696
- JP-A- 9 240 526
- JP-U- 61 191 982
- US-A- 4 874 052
- US-A- 5 372 212
- US-A1- 2005 173 984

## Description

The present invention relates to a continuous track tensioning system for tracked vehicles.

Continuous tracks have been known for many years. They are extremely useful in situations where the ground is uneven and/or soft. The purpose of a continuous track is to spread the weight of the vehicle over a large surface area. This reduces the pressure exerted on the ground to a fraction of what the equivalent pressure would be if the vehicle had tyres instead of tracks. By reducing the pressure exerted on the ground the vehicle is less likely to become immobilised by poor ground conditions. As a consequence of this, the types of vehicles fitted with continuous tracks are often found on construction sites, mines, forests and other such areas where hard-surfaced, such as "metalled", constructed roads are not present.

Continuous tracks are traditionally made up of several track segments connected together to allow, at least partial, relative movement therebetween. Alternatively, continuous tracks are known which are made from a continuous length of flexible material such as heavy-duty plastics and/or rubbers. These tracks may include gripping formations on their outer surface (these are sometimes known as "grousers" in the industry). These gripping formations may be chevron in shape, or be a series of ribs running perpendicular to the length of the track. Other patterns and shapes are also possible.

The tracks typically include engagement means on their inner surface for engaging with at least one drive wheel or sprocket. The continuous track runs partially around at least two wheels, at least one of which is a drive wheel or sprocket. Typically, for heavy-duty plant such as bulldozers or tippers, the track runs around three principal wheels such that the track forms an approximate triangular shape when viewed from the side. In this formation, the drive wheel is typically the upper most wheel with the two lower wheels serving to define the shape but not necessarily being driven to drive the track.

It is also typical to have idler or jockey wheels associated with the continuous track. These help prevent the track from being pushed inwardly by uneven ground. In other words, they help to maintain the shape of the continuous track, especially along the lower, ground contacting, portion of the continuous track. Idler wheels may also be used at other points around the perimeter of the continuous track to maintain its shape for various reasons which will be discussed below.

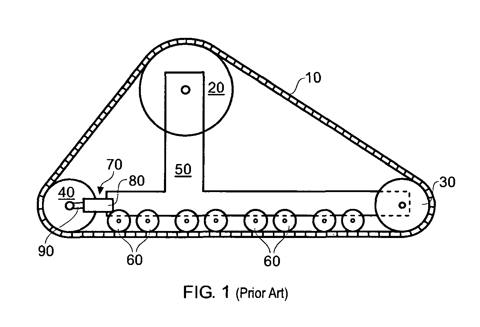

With reference to Figure 1, which depicts a known continuous track system, the continuous track 10 is held in an approximate triangular shape when viewed from the side by three wheels 20, 30, 40. The upper wheel 20 is the drive wheel or sprocket which drives the continuous track around the three wheels 20, 30, 40. The wheels 30, 40 are not driven in this case but merely act to maintain the shape of the overall continuous track 10. The three wheels 20, 30, 40 are maintained in approximate position to one another by means of sub-structure 50 which in this case is appropriately shaped steel work which maintains the centre points of each of the three wheels 20, 30, 40 relative to one another. The three wheels 20, 30, 40 all rotate about their centre points.

Idler or jockey wheels 60 are shown situated between the lower wheels 30, 40. These wheels 60 typically are provided in pairs. They help to maintain the track at the lower portion between lower wheels 30, 40 in contact with the ground.

For effective use and to prolong the life of the continuous track and its associated structure it is known that the tension in the track must be managed. In other words, a track with a reasonable degree of tension within it is better than one which is too slack. This is because a slack track increases the likelihood of slippage between the track and the drive means (possibly the drive wheel or sprocket). By contrast, a track which has too much tension in it is also undesirable since it can increase wear on the system and is inefficient in that there is more friction in the system which has to be overcome by the drive means. With regard to the former undesirable position, namely too much slack in the track, it is known that continuous tracks may elongate over time due to wear. Accordingly, it is known to manage the tension in continuous tracks by the provision of a tensioner means. Such tensioner means may take the form of a spring urging one of the wheels away from the others. Other forms of tensioning means are known such as hydraulic rams made up of a barrel, or cylinder, and a piston or piston rod. Such prior track tensioning systems are known from GB-A-2393696 ,which discloses a continuous track tension after the preamble of claims 1,JP-A-09240526, US-A-4,874,052 and JP-A-61191982.

An example of a prior track tensioning system is shown in Figure 1 and referenced 70. The axis about which wheel 40 may rotate is not fixed relative to the structure 50 about which wheels 20 and 30 rotate. Rather, its axis is linked via a tensioner means 70 comprising a barrel 80 and a piston 90. By this arrangement, and by careful control of the hydraulic fluid within the barrel 80, the relative position of the axle for wheel 40 relative to the structure 50 may be adjusted so that in turn the tension within the track 10 is adjusted. This is because, the piston may be extended or retracted relative to the barrel 80. In this way, the tension in the track may be increased or decreased as appropriate. However, it is typical for these tensioner means to be set at a predetermined setting and for the settings to be only manually changed as and when necessary, for instance at times of servicing.

A disadvantage of the known system is that if an external force is applied to the continuous track 10 in the region of the tensioned wheel 40 the tensioner means 70 may be overcome such that the piston 90 is pushed back in towards the barrel 80 thus making the track slack. In such circumstances it is known for the track 10 to become disengaged with either or both the drive wheel 20 and forward guide wheel 30. Even when the external force is removed, the track may not re-engage with the wheels 20, 30 such that the vehicle is substantially immobilised until the track has been repositioned correctly. An example of an external force could be provided by the vehicle approaching an object on the ground surface such a rock.

Accordingly, there is a need for an improved continuous track tensioning system.

This object is achived by means of a continuons track tensioning system according to claim1, and a rehide fitted with such a system according to claims 9.

In a first aspect, the invention provides a continuous track tensioning system for tracked vehicles; the system comprising a support structure supporting at least one jockey wheel and at least two substantially freely rotatable tensioner wheels for supporting a continuous track, the system further comprising at least two tensioner means, one end of each tensioner means being pivotably connected to the support structure, and the at least two tensioner wheels being rotatably connected to an opposite end of each tensioner means for applying a force to the track to induce tension therein, and control means for adjustably controlling the at least two tensioner means, wherein if the force applied by at least one of the tensioner means is overcome by a force external to the system the control means maintains the tension in the track by means of the at least one other of the tensioner means, and wherein at least one of the at least two tensioner means is arranged to be able to apply force to the track in a substantially downward direction, characterised in that the axle of each tensioner wheel is pivotably connected by a link member of predetermine length to the axle of an adjacent jockey wheel.

In this way, the continuous track may have tension induced within it at two or more points around the perimeter of the track. These two points are preferably located at separate places around the perimeter of the track. Accordingly, if a force external to the track presses against the track at one of the points at which tension is induced in the track the tensioning means may be overcome. However, since the other tensioning means may apply tension to the track at a point removed from the tensioning means in contact with the external force it will still be able to provide tension in the track and indeed will be able to compensate for the lack of tension being provided by the tensioning means in contact with the external force.

According to the invention, at least one of these said at least two tensioner means is arranged to be able to apply force to the track in a direction substantially downwards (towards the surface on which the vehicle may travel). In other words, the tensioner means is arranged to apply force in a direction even slightly towards an imaginary plane parallel with the base of the triangular shape of the track. More preferably, the tensioner means are able to apply force onto the inside of the track wherein the direction of the force has an angle to the imaginary horizontal plane passing through the length of track in contact with the ground surface which lies in the range of 45° plus or minus 20°. In one embodiment, the force may be directed perpendicularly downwards towards the imaginary horizontal plane/ground surface.

In one embodiment, there are only two tensioner means.

The tensioner means may be provided in the form of hydraulic or pneumatic cylinders and pistons. Alternatively, or additionally, the tensioner means may be provided in the form of electromagnetic solenoids, cams, or actuators which may be displaced towards and away from the insides of the track by means of rotational movement. Other forms are of course possible and are contemplated herein.

If the tensioner means are provided in the form of hydraulic or pneumatic cylinders and pistons then the system may comprise fluid supply means for supplying each tensioner means. The fluid supply means for each tensioner means may be interconnected. In one embodiment, the control means may be the inter-connected fluid supply means. In other words, the control means may be pipes which allow pressurised fluid to flow from one tensioner to the other.

The control means may comprise valves, solenoids, relays, switches, a CPU, and/or other types of typical control hardware and/or software. The control means may control each tensioner means independently.

In one embodiment, more than one tensioner wheel may be freely and rotatably connected to each tensioner means. For example, two tensioner wheels may be connected with which to apply force to the track, and in another embodiment there may be even three tensioner wheels for providing tension in the track. In these cases the tensioner wheels may be arranged substantially adjacent one another and may have coincident centres so that the wheels lie across the width of the track.

The tension induced in the track may be adjustable. The adjustability of the tension may be controlled by the control means.

If each of the tensioner means is provided in the form of hydraulic or pneumatic pistons and cylinders then the two tensioner means may be interconnected in such a way that when one piston is displaced relative to its barrel the other piston is displaced relative to its barrel in a proportional manner. For instance, if both pistons are at rest projecting approximately 50% of their length out of their respective barrels and a force is applied to one piston such that it is moved in towards its barrel by 25% of the length of the piston then the other piston may be moved out of its respective barrel by 25% of its length. This assumes that both barrels and pistons have the same dimensions. If the respective barrels and pistons have different dimensions then the displacement of one will only induce proportional displacement in the other.

The interconnection between the two tensioner means may be direct or may be made via the control means. If they are made via the control means then the control means may, in one embodiment, allow direct connection between the two tensioner means but, in an another embodiment may intervene such that the displacement in one tensioner means does not automatically result in proportionate displacement in the other tensioner means. Nonetheless, a basic embodiment of the invention does allow direct connection between the two tensioner means such that displacement in one results in displacement in the other tensioner means. This provides a simple and economic means of maintaining tension in the track at all times.

When the track is first fitted to the system the tensioner means may be adjusted so as to provide a pre-defined tension within the track. This may be effected by introducing fluid into the system to a particular pressure level.

In one embodiment the system may comprise sensitivity means for adjusting the sensitivity of the tensioner means to external forces. These sensitivity means may be controlled by, or may be, the control means.

This means that it may be possible to increase the stiffness of each of the tensioner means independently from one another. By increasing the stiffness, the magnitude of the force which must be applied to the tensioner means in order to overcome its resistance to movement, which may be provided by the hydraulic or pneumatic fluid in the system or the electrical current in the system, may be increased or decreased or adjusted as necessary. This may allow the tensioner means to act as suspension means.

The system may further comprise a safety valve for relieving pressure above a threshold value in the fluid supply means. A safety valve having a typical construction and well known in the field could be used for this. The safety valve may be necessary in situations where a sharp impact to one of the tensioner means increases the pressure within the supply means above a safe threshold value. This may also occur with the ingress of foreign objects inside the track (for example, between the track and tensioner and/or jockey wheels). The safety valve may then relieve the excess pressure. Furthermore, the safety valve may guard against undue pressure in the supply means due to a failure in the control means and/or the hydraulic/pneumatic supply power pack.

If the tensioning means are hydraulic or pneumatic then a source of pressurised fluid is required. Typically heavy duty plant already have so-called "power packs" which provide pressurised fluid for the operation of hydraulic or pneumatic rams for the operation of tools such as rippers, blades, buckets, arms etc. Accordingly, in such cases it is relatively easy to use the existing power pack to also provide the pressurised fluid for the tensioner means necessary for the operation of the tensioning system. However, if the vehicle to which the tensioning system is to be used does not already have its own power pack then an independent power pack may be provided as part of this system, or as part of the vehicle, for providing the necessary pressurised fluid.

It is contemplated that the tensioner system and associated continuous track and track assembly may be fitted to either side of a vehicle. In this case, it is possible that the tensioner means on either side of the vehicle are interconnected. This may allow automatic or controlled management of both tensioner means in response to ground conditions and/or other such external factors. For instance, this interconnection may be used to aid damping of any vibration induced in the vehicle and/or track assemblies.

In one embodiment, the tensioner means are, and/or act as, shock absorbers.

The system may include a drive wheel. The system may also include a continuous track. In other words, the tensioner means may be included in a subassembly including the drive wheel, or sprocket, support structure and continuous track together with other necessary support wheels, or idler/jockey wheels. In this way the support structure may be separate from the vehicle such that the system is pre-assembled ready for fitting, or retrofitting, onto a vehicle. However, in one embodiment the support structure could be part of the vehicle. The drive wheel may be attachable to a drive axle or drive shaft of a vehicle. The attachment may be releasable. In one embodiment, this drive axle may be used for turning tyred wheels for movement of the vehicle such that the vehicle is converted to track usage by removing the tyred wheel(s) and attaching the drive wheel of the system to the drive axle.

It is typical for continuous track systems to be driven by means of a main drive wheel or sprocket, as discussed above. The system comprises a support structure which may be connected to the vehicle by the vehicle's drive axle passing through the drive wheel. Accordingly, although relatively uncommon, it is possible for the complete track assembly, including the system as described herein, to rotate relative to the vehicle around the axis of the drive wheel. To prevent this from occurring it is known to limit the rotation of the track assembly relative to the vehicle by means of straps. Although these straps do limit the relative rotation their lengths are predetermined and are only manually adjustable so that there may be occasions when the straps are not long enough to accommodate the particular circumstances. Accordingly, in one embodiment, the system includes a rotation limiting device for limiting the rotation of the system about the drive wheel. The rotation limiting device may comprise a hydraulic or pneumatic cylinder and piston. The rotation limiting device may be controlled by the control means. By replacing the straps with an hydraulic or pneumatic piston and barrel, or electromechanical device etc, the degree with which the rotation is limited may be adjustable. This adjustment may be automatic.

In one embodiment, the rotation limiting device is adjoined at one end with the track assembly, or support structure forming part of the assembly and tensioner system, and at the other end with the body of the vehicle. The rotation limiting device may be located to one side of the drive wheel. Alternatively two rotation limiting devices may be provided one on either side of the drive wheel.

The rotation limiting devices may also provide a certain degree of suspension in that they may compensate for uneven ground such that the vehicle body is maintained at a substantially stable position relative to the ground surface with the uneven ground surfaces being accommodated by the track assembly rotating relative to the vehicle body and as controlled by the rotation limiting devices. In this respect, the rotation limiting devices may be active as well as passive.

The system may include sensors for determining the relative position of a vehicle to the track assembly. In this way, the rotation limiting devices may be used to keep the vehicle stable relative to the ground surface and/or the track assembly, by means of the rotation limiting devices.

The control means may be used to control the rotation limiting devices.

In one embodiment, the system may be in a high drive configuration. This may be similar to, or the same as, the arrangement shown in Figure 1 discussed above. The term "high drive" is well known to the skilled person and means a system which is approximately triangular in shape when viewed from the side of the vehicle whereby the drive wheel is located at the vertex of the triangle so that it is as far away as possible from sources of contamination or foreign material which might cause damage. Two other wheels or guides are located at the lower corners of the triangle. Accordingly, in one embodiment, the system may include means for maintaining the shape of the track, in a plane substantially parallel to a length of the track and oriented substantially vertically in use, in a substantially triangular shape. The means may include wheels for maintaining each corner of the substantially triangular shape. The means for maintaining the vertex of the substantially triangular shape may be a drive wheel. The drive wheel may be located substantially equidistant between the means for maintaining the lower corners, (i.e. not the vertex) of the substantially triangular shape. The means for maintaining each lower corner of the substantially triangular shape may be a tensioner wheel.

Even if not in a high drive configuration it may be preferable to locate one of the tensioner means at each of the two lower corners of the track (when viewed from the side). For example, if the track is triangular in shape or trapezoidal in shape it will have two corners adjacent the surface on which the vehicle travels. Having the tensioner means located in these positions may provide a certain amount of shock absorbency to the track as these will be the points at which it may contact objects in or on the surface which may otherwise cause damage to the system.

The control means may be used to increase the tension in, and/or the shape of, the continuous track which may be useful at certain times. For instance, a tipper is more stable if the area of the tracks which are in contact with the ground surface is as large as possible. Additionally or alternatively, during tipping, a tipper is more stable if its centre of gravity is located underneath, or as close as possible to being underneath, the point at which the load rotates during tipping. Accordingly, by adjusting the contact area between the continuous track and the ground the centre of gravity of the tipper may be affected. This may be achieved not only by increasing the surface area of the tracks in contact with the ground but also by moving the area which is in contact towards the point at which the load is rotated about during tipping. In other words, by extending the tensioner means towards the front of the vehicle (if it is the front of the vehicle from where the load is tipped) or towards the rear of the vehicle (if it is the rear of the vehicle from where the load is tipped) the area of the tracks in contact with the ground will be closer to being directly underneath the tipping point. This will also provide a greater reactive force resisting the inherent overturning moment induced in the system due to the act of tipping.

When a tracked vehicle fitted with the system needs to pass over an object on an otherwise relatively planar surface (for instance a log flying across a road) the front tensioner means may be pressed inwards, by the object, towards the rear of the vehicle and the rear tensioner means may compensate for the induced slack in the track by extending further outwardly from the vehicle, as described above. However, it has been surprisingly found that by, altering the shape of the overall perimeter of the continuous track in this way the vehicle may be lifted at its front end so that it more easily climbs up and over the obstacle.

When a vehicle fitted with continuous tracks travels in one direction it is known that the forces induced in the track by the drive means and the contact with the surface over which it travels, may change the shape of the overall continuous track. For instance, when the vehicle is travelling, the tensioner means located towards the rear of the track will be pulled upwards and inwards by the force of the drive means pulling the track "upwards". The front tensioner means will compensate for the slack induced in the track by the movement of the rear tensioner by being displaced away and outwardly from the centre of the track system. The greater the torque applied by the drive means the greater the pull on the track and consequently the further the rear tensioner will move upwardly and inwardly and the further the front tensioner will move downwardly and outwardly.

The system may, in one embodiment, be symmetrically in use about a vertical axis so that a vehicle having a system installed on both sides is symmetrical about a vertical plane passing through the length of the vehicle parallel to the length of the tracks. This allows for a system to be fitted to the right or left side of a vehicle. In other words there may be no "right" and "left" systems, there may only be one system which may be fitted to either side.

The symmetry of the system may be about a vertical plane passing through the system transverse to the length of the track and through the centre of the drive wheel.

The system may have a bi-directional configuration such that it may be used to move a vehicle easily in either direction.

In a second aspect, the invention provides a vehicle fitted with the inventive system described above.

The speed of the vehicle may affect the operation of the control means. The control means may be affected by other factors. If the control means is affected by the speed of the vehicle then the vehicle may also comprise means for determining the speed of the vehicle. The control means may be affected in that when the speed of the vehicle is substantially zero the tensioner means may be operated to provide increased stability to the vehicle in any one or more of the ways discussed above.

The vehicle may be articulated including an articulation joint, wherein each part of the vehicle either side of the articulation joint includes a system, having any combination of the features described above, on both sides.

One part of the vehicle on one side of the joint may have means for carrying a tippable load. For instance the vehicle may be a site dumper having two articulated parts. One part may have a tippable skip for carrying a load and the other part may include the engine and power pack and carry the driver. Both, or either, of the two parts may have systems, having any combination of the features described above, on both sides.

The embodiments for the present invention will now be more particularly, described, by way of example only, with reference to the accompanying drawings in which:
Figure 1 is a side view of a known continuous track and tensioning system;
Figure 2 is a side view of a continuous track tensioning system according to the first aspect of the invention in a first position;
Figure 3 is a side view of the track tensioning system of Figure 2 in a second position;
Figure 4 is side view of the track tensioning system of Figure 2 in a third position; and
Figure 5 is a diagram illustrating the means of connection and control of the elements of one embodiment of the invention;

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

The phrase "jockey wheel" should be understood to mean an object which may guide and/or support a continuous track so as to maintain its shape. Typically, they are wheels but the phrase also encompasses the possibility of suitably shaped objects over which the track may slide. In this form the "wheels" may not rotate but may pivot. If the jockey wheels are truly wheels then they are typically not driven but are freely rotatable. However, in some circumstances it may be necessary to drive at least one jockey wheel.

Figure 1 is described above.

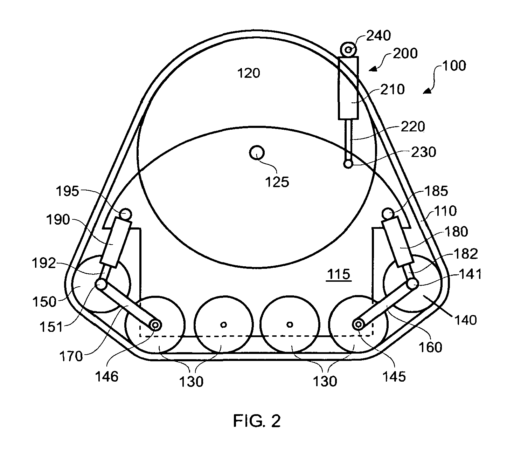

In Figure 2 the reference 100 refers to a continuous track tensioning system including a continuous track 110 and a drive wheel 120. A rotation limiting device 200 is also shown. The track 110 passes over and is engaged with at least some of the circumferential surfaces of the drive wheel or sprocket 120, idler, or jockey, wheels 130 and tension wheels 140, 150. The whole system 100 is attached to the drive shaft or axle 125 which is typically arranged on the side of a vehicle. Further, it is typical for one of these systems 100 to be provided on either side of the vehicle. In some cases, it is possible to have more than one of these systems 100 on either side of the vehicle.

The drive shaft 125 rotates thus rotating the drive wheel 120 and thus turning the track 110. The idler wheels 130 are fixed in position relative to the drive wheel 120 by means of support structure 115. This support structure may take the form of sheet steel or other suitable material. Its shape is for illustrative purposes only. Tension in the continuous track 110 is provided by tensioner means. There are two tensioner means shown in Figure 2. The first tensioner means is shown on the right and the second is shown on the left. The tensioner means are provided between the idler wheels 130 and the drive wheel 120. The overall approximate shape of the continuous track 110 is triangular, when viewed from the side, with the tension wheels 140, 150 provided at each of the two lower corners of the triangle. Tension wheel 140 presses against the inside of the track 110. It is urged against the track by means of a barrel 180 and piston 182. The distal end of the piston 182 is connected to the axle 141 about which tension wheel 140 rotates. The distal end of the barrel 180 is fixed to the support structure 115 at point 185 about which it may rotate. The rotation of the tension wheel 140 about point 185 is limited by means of a link member 160 which connects the axle 141 of the tension wheel 140 with the axle 145 of the nearest jockey wheel 130. The same is repeated on the left hand side of the structure 100 in that there is a barrel 190 and an associated piston 192. The distal end of the barrel is pivoted at point 195 to the support structure 115. The distal end of the piston 192 is connected to the centre 151 of tension wheel 150 about which this jockey wheel rotates. The axle 151 is linked to the axle 146 of the nearest jockey wheel 130 by means of a link member 170. This link member limits the, and defines a predetermined radius of, rotation of the tension wheel 150 about point 146.

Figure 2 also illustrates the rotation limiting device 200. This device 200 comprises a barrel 210 and a piston 220. The distal end of the piston 220 is connected to the support structure 115 at point 230. The distal end 240 of the barrel 210 is connected to the side of vehicle (not shown).

When a vehicle fitted with such a continuous track tensioning system 100 travels the rear tensioner will be pulled upwards and inwards relative to the surface over which the vehicle is travelling. This is due to the force of the drive means pulling the track upwardly as discussed above. The front tensioner will compensate for this by extending further outwards thus taking up any slack in the track. This situation is not shown in the attached drawings.

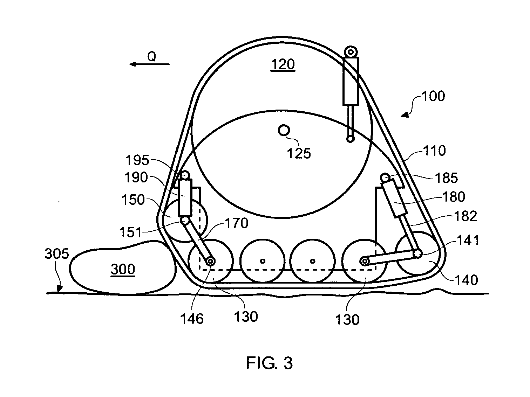

In Figure 3 the vehicle to which the system 100 is associated is travelling in the direction referenced "Q" (i.e. towards the left hand side of the drawing). The surface 305 on which the track 110 is running has an object 300 present on its surface. An example of such an object could be a rock. The leading edge of the system 100 has met with this object 300. This object 300 provides an external force onto the track 110 such that the left hand tensioner means is moved. The piston 192 has been pushed inside the barrel 190 so that tensioner wheel 150 has rotated about fixed point 195.

To compensate for the slack induced in the track 110 by the front tensioner means having moved, the rear tensioner means has displaced the piston 182 relative to the barrel 180 such that tensioner wheel 140 has been moved outwardly relative to the axis 125 of the drive wheel 120. The tension within the continuous track has thus been maintained. The movement of the two tensioner means may have been automatic in that the fluid system connecting the two tensioner means is a closed system such that the movement of the piston 192 relative to the barrel 190 moves fluid through the system from the front tensioner means to the rear tensioner means so that the rear piston 182 is pushed outwardly relative to the barrel 180. Alternatively, or additionally, the movement of the two tensioner means may also be partially or fully controlled by the control means (not shown).

With the front tensioner means in the retracted position the vehicle will be able to begin "climbing over" the rock more easily. Additionally, or alternatively, to overcome the force being applied by the rock onto the track the torque in the drive means 120 may be increased (automatically or under driver control). This increase in torque will pull the track upwardly at the rear of the system 100 thus retracting piston 182 into barrel 180. Accordingly, to compensate for the subsequent increase in slack in the track the front tensioner means will extend outwardly pushing the front tension wheel 150 forwardly and/or downwardly. This action will lift the front of the vehicle over the rock 300 thus assisting in the vehicle's journey.

Once the vehicle has passed over the object 300 then it is expected that the tension wheels 140, 150 would return to their stable position as shown in Figure 2 if the vehicle is stationary. However, as discussed above, it has been found that if the vehicle moves at a speed greater than a predetermined value the shape of the continuous track 110 will naturally assume a shape wherein the rear tensioner is retracted by comparison with the front tensioner. Alternatively, or additionally, it may be desired to employ the control means to affect the shape of the continuous track 110 to improve efficiency or to achieve a particularly desired result based on the ground conditions or use of the vehicle.

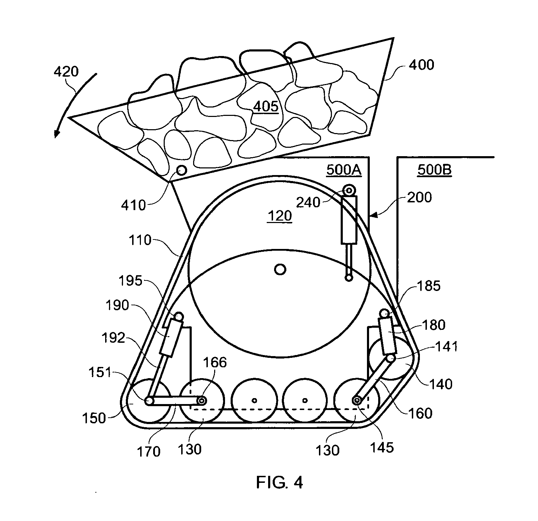

In Figure 4, the front tensioner means has been adjusted so that the area of the continuous track 110 which is in contact with the ground surface is located more towards the front of the vehicle than the rear of the vehicle. This is because in this example the vehicle which has a body 500A and 500B includes a tipping part 400, towards the front of the vehicle, which is carrying a load 405. The tipping part 400 may rotate about axis 410 in a direction 420. During the tipping manoeuvre, the centre of gravity of the load will move to the left as the bucket holding the load is tipped to the left, or front of the vehicle. Accordingly, by moving the area of the tracks 110 which is in contact with the ground surface and thus shifting the centre of gravity of the vehicle there is less likelihood that the vehicle will overturn during tipping operation. As well as moving the centre of gravity of the vehicle towards the front, the act of altering the shape of the track to move the area in contact with the ground also provides a greater reactive force resisting the overturning moment induced in the vehicle during tipping.

To compensate for the front tensioner means being extended, the rear tensioner means have retracted such that the tension wheel 140 has been lifted away from the ground and in towards the axis 125 of the drive wheel 120. This has been achieved by the piston 182 retracted inside the barrel 180. This operation may be affected by the control means. The tension in the track is therefore effectively maintained constant. However, it may be possible to simultaneously extend both tensioner means outwardly to thus provide greater tension in the track and an even greater area of contact between the track and ground surface.

Although not shown, it is possible to have other tensioners located within the perimeter of the track which are typically extended in normal operation but which may be retracted as necessary so as to introduce greater slack into the track which may be taken up by the front and rear tensioners so as to provide the track with as great an area of contact with the ground as possible.

The rotation limiting device 200 is shown rotatably fixed at the upper part 240 to the vehicle body 500A.

The vehicle body 500A and 500B may be articulated such that body 500A is separated from body 500B by an articulation joint. Each body 500A,500B may have systems 100 provided on each side.

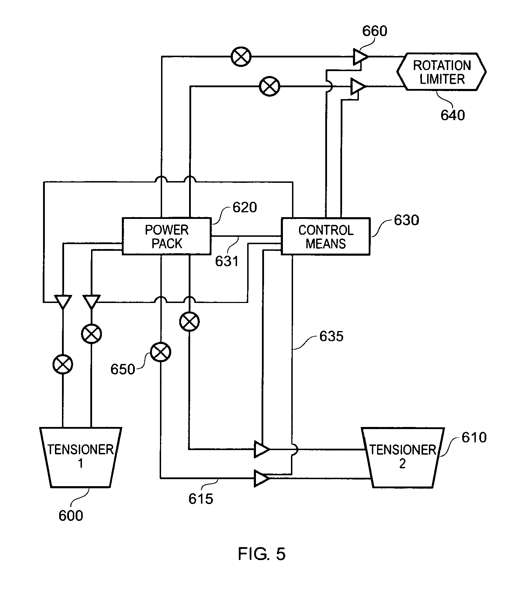

In Figure 5, the two tensioner means 600, 610 are shown. They are connected by hydraulic lines, pipes or conduits 615, to the power pack 620. The power pack 620 is controlled by the control means 630 by means of control links 631. The rotation limiter 640 is also connected to the power pack by means of hydraulic lines or pipes. In each of the hydraulic lines safety valves 650 are provided. These prevent over pressure in the system from damaging any of the elements.

Each of the hydraulic lines 615 also includes a control valve 660. These control valves are 660 controlled by the control means 630 by means of control lines 635. The control valves 660 may regulate the supply of fluid through the supply lines 615 and thus from reaching or leaving any one, or all of the elements 600, 610, 640. This may "lock" the tensioner means and rotation limiter means in their current positions for greater stability of the vehicle.

The control lines 635 may be electronic, electrical, hydraulic, pneumatic, or wireless. The power pack 620 may already be part of the vehicle or may be additionally provided.

## Claims

1. A continuous track tensioning system (100) for tracked vehicles; the system (100) comprising a support structure (115) supporting at least one jockey wheel (130) and at least two substantially freely rotatable tensioner wheels (140, 150) for supporting a continuous tracks (110), the system (100) further comprising at least two tensioner means, one end (185, 195) of each tensioner means being pivotably connected to the support structure (115), and the at least two tensioner wheels (140, 150) being rotatably connected to an opposite and (141, 151) of each tensioner means for applying a force to the track (110) to induce tension therein, and control means for adjustably controlling the at least two tensioner means, wherein if the force applied by at least one of the tensioner means is overcome by a force external to the system (100) the control means maintains the tension in the track (110) by means of the at least one other of the tensioner means, and wherein at least one of the at least two tensioner means is arranged to be able to apply force to the track (110) in a substantially downward direction, **characterised in that** the axle of each tensioner wheel (140, 150) is pivotably connected by a link member (160, 170) of predetermined length to the axle of an adjacent jockey wheel (130).

2. The system according to claim 1, further comprising sensitivity means for adjusting the sensitivity of the tensioner means to external forces.

3. The system according to claim 2 wherein the sensitivity means may be controlled by, or comprise, the control means.

4. The system according to any preceding claim, including a drive wheel (120) and a rotation limiting device (200) for limiting the rotation of the system (100) about the drive wheel (120)

5. The system according to claim 4, wherein the rotation limiting devices (200) is connected, in use, at one end (240) to the body of a vehicle and at the other end (230) to the support structure (115).

6. The system according to any preceding claim having a bi-directional configuration.

7. The system according to any preceding claim, wherein the tensioner means are shock absorbers.

8. The system according to any preceding claim, the system (109) being pre-assembled and retro-fittable to existing vehicles.

9. A vehicle fitted with a system according to any preceding claim.

10. The vehicle according to claim 9, wherein the operation of the control means is affected by at least the speed of movement of the vehicle.

11. The vehicle according to either of claims 9 and 10 wherein the vehicle is articulated and includes an articulation joint, and wherein each part (500A, 500B) of the vehicle either side of the articulation joint includes a system (100), according to any of claims 1 to 9, on both sides.

12. The vehicle according to claim 11, wherein one part of the vehicle on one side of the joint has means (400) for carrying a tippable load (405).

## Patentansprüche

1. Ein Endloskettenspannsystem (100) für Kettenfahrzeuge; das System (100) besteht aus einer Tragkonstruktion (115) auf der sich mindestens ein Tastrad (130) und zwei im Wesentlichen frei drehende Spannräder (140,150) befinden, die die Endloskette (110) tragen. Das System (100) umfasst darüber hinaus mindestens zwei Spanner; ein Ende (185, 195) eines jeden Spanners ist drehbar mit der Tragkonstruktion (115) verbunden und mindestens zwei Spannräder (140, 150) sind drehbar mit dem gegenüber liegenden Ende (141, 151) der beiden Spanner verbunden, um eine Kraft auf die Kette (110) auszuüben und darin eine Zugspannung zu erzeugen, sowie Steuerelementen, um mindestens zwei Spanner durch Justierung zu regulieren, damit, wenn die Kraft, die von mindestens einem der Spanner aufgewendet und von einer von außen auf das System (100) wirkenden Kraft überwunden wird, das Steuerelement die Kettenspannung (110) mit Hilfe von mindestens einem der anderen Spanner aufrecht erhält, wobei mindestens einer der anderen zwei Spanner so angeordnet ist, um die Kraft auf die Kette (110) in einer hauptsächlich nach unten führenden Richtung zu übertragen, ist **dadurch gekennzeichnet, dass** die Achse eines jeden Spannrads (140, 150) über ein Verbindungselement (160, 170) mit vorgegebener Länge drehbar an der Achse eines benachbarten Tastrads (130) angeschlossen ist.

2. Das System gemäß Anspruch 1 umfasst ferner Empfindlichkeitselemente, um die Empfindlichkeit des Spanners auf die externen Kräfte einstellen zu können.

3. Das System gemäß Anspruch 2 verfügt über Empfindlichkeitselemente, die über Steuerelemente reguliert werden können oder aus diesen bestehen.

4. Das System gemäß den vorhergehenden Ansprüchen enthält ein Antriebsrad (120) und eine Drehbegrenzungsvorrichtung (200), um die Drehung des Systems (100) über das Antriebsrad (120) zu begrenzen.

5. Beim System gemäß Anspruch 4 ist eine Drehbegrenzungsvorrichtung (200) vorhanden, die an einem Ende (240) mit dem Fahrzeugkörper und am anderen Ende (230) mit der Tragkonstruktion (115) verbunden ist.

6. Das System gemäß den vorherigen Ansprüchen verfügt über eine bidirektionale Konfiguration.

7. Beim System gemäß den vorherigen Ansprüchen sind die Spanner die Stoßdämpfer.

8. Beim System gemäß den vorherigen Ansprüchen ist das System (100) vormontiert und auf bestehende Fahrzeuge nachrüstbar.

9. Fahrzeug, das mit einem System gemäß den vorhergehenden Ansprüchen ausgerüstet ist.

10. Beim Fahrzeug gemäß Anspruch 9 ist die Bedienung der Steuerelemente mindestens von der Bewegungsgeschivindigkeit des Fahrzeugs abhängig.

11. Beim Fahrzeug gemäß 9 oder 10, das mit Gelenken und einer Gelenkverbindung ausgestattet ist, ist jedes Teil (500A, 500B) des Fahrzeugs an beiden Seiten der Gelenkverbindung mit einem System (100) gemäß den Ansprüchen 1 bis 9 an beiden Seiten ausgestattet.

12. Beim Fahrzeug gemäß Anspruch 11 ist ein Teil des Fahrzeugs an einer Seite der Gelenkverbindung mit Elementen (400) zum Tragen einer kippbaren Last (405) ausgestattet.

## Revendications

1. Système (200) de tension continue de chaîne pour véhicules tractés par chaînes; le système (100) comprend une structure (215) supportant au moins une roue (130) et au moins deux roues de tension (240, 150) pour supporter une chaîne continue (110), le système (100) comprenant de plus au moins deux moyens de tension, une extrémité (285, 295) de chaque moyen de tension étant raccordée sur pivot libre à la structure de support support (115), et les deux au moins moyens de tension (240, 150) libres en rotation sur l'extrémité opposée (142, 152) de chaque moyen de tension pour appliquer un effort à la chaîne (110) et y exercer une tension, et des moyens de commande pour régler les moyens de tension où, si l'effort appliqué par au moins un des moyens de tension est supérieur à un effort externe sur le système (100), les moyens de commande maintiennent la tension de la chaîne (110) au moyen au moins d'un des moyens de tension, et où au moins un des deux au moins moyens de tension est disposé de façon à pouvoir appliquer un effort sur la chaîne (110) essentiellement vers le bas, **caractérisé par le fait que** l'essieu de chaque roue de tension (140, 150) est raccordé sur pivot par une liaison (160, 170) de longueur prédéterminée à l'essieu d'une roue jockey adjacente (130).

2. Le système, conformément à la revendication 1, comprend de plus des moyens de sécurité pour régler la sensibilité des moyens de tension sur les efforts externes.

3. Le système, conformément à la revendication 2, où les moyens de sensibilité peuvent être commandés par, ou comprendre, les moyens de commande.

4. Le système, conformément à toute revendication précédente, comprend une roue d'entraînement, un dispositif de limitation en rotation (120) et un dispositif de limitation en rotation (200) pour limiter la rotation autour de la roue d'entraînement (220).

5. Le système, conformément à la revendication 4, où le dispositif de limitation en rotation (200) est raccordé, en utilisation, à une extrémité (240) au châssis du véhicule et à l'autre extrémité (230) à la structure de support (115).

6. Le système, conformément à toute revendication précédente, comporte une configuration bidirectionnelle.

7. Le système, conformément à toute revendication précédente, où les moyens de tension sont des amortisseurs.

8. Le système, conformément à toute revendication précédente, le système (100) étant pré-assemblé et pouvant se monter en deuxième monte sur des véhicules existants.

9. Un véhicule équipé d'un système conforme à toute revendication précédente.

10. Le système, conformément à la revendication 9, où le fonctionnement des moyens de commande est affecté par au moins la vitesse de déplacement du véhicule.

11. Le véhicule, conformément à la revendication 9 ou 10, où le véhicule est articulé comprend une liaison articulée et où chaque pièce (500A, 500B) du véhicule de chaque côté de l'articulation comprend un système (200), conformément à n'importe quelle revendication 1 à 9, des deux côtés.

12. Le véhicule, conformément à la revendication 12, où une partie du véhicule d'un côté de l'articulation comporte les moyens (400) pour transporter une charge basculante (405).
